# EUROPÄISCHE PATENTANMELDUNG

(11) **EP 0 666 043 A1**
(43) Veröffentlichungstag der Anmeldung: **09.08.1995**
(21) Anmeldenummer: 94111012.4
(22) Anmeldetag: 15.07.1994
(51) Int. Cl.: A47B 77/02, A47B 77/16, A47J 43/00

(54) **Arbeitsmittelsystem für die Lebensmittel-Zubereitung**

(30) Priorität: 03.02.1994 DE 9401751 U
(71) Anmelder: Trenker, Rudolf, D-35232 Dautphetal (DE)
(72) Erfinder: Grün, Hans-Peter, I-19032 Lerici (IT); Trenker, Rudolf, D-35232 Dautphetal (DE)
(74) Vertreter: Olbricht, Karl Heinrich, Dipl.-Phys.

(57) **Zusammenfassung**

Ein Arbeitsmittelsystem für die Lebensmittel-Zubereitung hat auf einer Grundplatte (1, 13) für variable oder ortsfeste Aufstellung eine Sammelebene, ein Untergestell (2, 19) als Abstandhalter und darauf eine Arbeitsplatte (3, 14) als Arbeitsebene. Die Arbeitsplatte (3, 14) weist Durchfallöffnungen (4, 5, 6) und /oder seitlich offene Durchfallausnehmungen (15, 16) für Schnittgut und für Abfall auf, unter denen auf der Grundplatte (1, 13) Auffangschalen (7, 8; 17, 18) aufstellbar sind und in deren Zugriffsbereich sich eine Schublade (11, 20), ein Messerblock M oder ein Wandregalteil (31) mit Schneid- und Zerkleinerungs-Utensilien befindet. Das System eignet sich zur freien Aufstellung, aber auch zum Einbau in Möbelteile bzw. -fronten. Bei Wandbefestigung kann die Arbeitsplatte (21) hochklappbar sein (Fig. 9 und 10). Ein Schneidbretteinsatz (67) aus Holz oder Kunststoff läßt sich nach Bedarf wenden oder austauschen.

## Beschreibung

Die Erfindung betrifft ein Arbeitsmittelsystem für die Lebensmittel-Zubereitung gemäß dem Oberbegriff der Ansprüche 1 und 9 bis 11.

In der modernen Ernährung kommt es darauf an, die Ausgangsmaterialien möglichst schonend zu behandeln, um die Nährstoffe weitestgehend zu erhalten, also einen hohen Nutz- und Genußwert zu erzielen. Dabei hat Rohkost aufgrund ihres hohen Wirkstoffgehaltes und wegen ihrer positiven Wirkungen im menschlichen Organismus besondere Bedeutung. Insbesondere bei der Vorbereitung und Zubereitung der verschiedenen Gemüsearten muß großer Wert darauf gelegt werden, daß die wertvollen, hinsichtlich ihrer Beständigkeit sehr empfindlichen Wirkstoffe möglichst ungeschmälert erhalten bleiben.

Die Vorbereitung besteht allgemein in einem Reinigungsvorgang, bei dem durch Waschen und gegebenenfalls Putzen oder Schälen Reste wie Gartenerde und sonstige Verschmutzungen beseitigt werden. Hierbei treten, abgesehen von zu langem Wässern, erfahrungsgemäß weniger Fehler in der Bearbeitung auf. Anders ist es bei der Zubereitung, worunter z.B. das Ausschneiden ungenießbarer Pflanzenteile, das Abteilen der verschiedenen Gemüsebestandteile sowie das Zerkleinern und Sortieren oder Mischen verstanden wird.

Für die praktische Arbeit sind viele Küchengeräte bekannt, wozu regelmäßig eine stand- und verschiebungsfest auf einem tisch-, schrank-, oder regalartigen Küchenmöbel angeordnete Arbeitsplatte, ferner Behältnisse für die Aufnahme des Schnittgutes sowie Schneid- und Zerkleinerungs-Utensilien gehören.

Einfache Schneidbretter bzw. als Schneid- und Sortierbrett benutzte Arbeitsplatten bestehen normalerweise aus einem gehobelten Massivholz-Brett, einer verleimten Sperrholzplatte oder aus einer Kunststoffplatte z.B. aus Polytetrafluorethylen (Teflon). Solche Bretter oder Platten sind in den verschiedensten Formen bekannt: ohne Griffteil oder mit eingearbeiteter Griffausnehmung, mit angesetztem oder angearbeitetem Griffstück, mit obenseitiger Umfangsnut zum Auffangen von Flüssigkeiten und mit Randleisten zur Eingrenzung des Schnittgutes. Nachteilig an diesen bekannten Schneidbrettern und Arbeitsplatten ist deren gewissermaßen auf den bloßen Schneidvorgang eingeschränkte Verwendungsmöglichkeit.

DE-U-7 803 049 beschreibt ein aus einem topf- oder schalenartigen Aufnahmebehälter und einer Arbeitsplatte zum Schneiden von Gemüse, Obst u.dgl. bestehendes Arbeitsgerät für Haushaltszwecke, bei dem das geschnittene oder geschnitzelte Gut von der Arbeitsplatte in einen danebenliegenden Aufnahmebehälter geschoben werden kann, an dem sie mit lösbaren Magnethalterungen seitlich befestigt ist. Dabei sind die Arbeitsfläche der Arbeitsplatte und der obere Rand des Aufnahmebehälters entweder auf einer Ebene oder der Behälter liegt etwas tiefer. Die Höhe der Arbeitsplatte ist mit teleskopartig ausziehbaren Standfüßen, Seitenwänden o.dgl. einstellbar. Nachteilig an diesem Arbeitsgerät ist, daß es durch den seitlich an der Arbeitsplatte abstehenden Aufnahmebehälter einen verhältnismäßig großen Platz einnimmt, wodurch die Trennung zwischen Schnittgut bzw. zwischen mehreren unterschiedlichen Schnittgut-Arten und Abfall nicht möglich ist.

Eine mobile Schneid- und Abfallsammelvorrichtung für das Vorbereiten von pflanzlichen Nahrungsmitteln ist in DE-A-3 820 185 dargestellt. Zwei gleichgroße, durch ein Scharnier miteinander verbundene Schalen bilden hierbei zusammengeklappt eine geschlossene tragbare Einheit. Eine Schale weist ein Schneideteil aus Holz oder Kunststoff auf, auf dem man - ganz oder teilweise - innerhalb der Schale Gemüse oder Kräuter so schneiden kann, daß das geputzte Gut in der einen Schale verbleibt und der Abfall in die andere Schale geschoben wird. Nachteilig an dieser bekannten Vorrichtung ist schon aus hygienischen Gründen die nebeneinanderliegende Anordnung der Gemüseschale mit dem Schneidbrett und der Abfallschale sowie das Zusammenklappen der beiden Schalen bei der Abfallbeseitigung. Durch die konstruktive Einschränkung auf zwei Schalen sind auch die Anwendungsmöglichkeiten begrenzt. Eine Trennung von unterschiedlichem Schnittgut in verschiedene Gemüsearten und Abfall ist nicht möglich.

Der Erfindung liegt die Aufgabe zugrunde, ein Arbeitsmittelsystem für die Lebensmittel-Zubereitung mit der Basiseinheit einer Arbeitsplatte zu entwickeln, das die Be- und Verarbeitung des Ausgangsmaterials von der Reinigung, dem Absondern und Beseitigen von Abfällen, dem Abteilen der verschiedenen verwertbaren Bestandteile bis zu deren Zerkleinern, Sortieren oder Mischen in ergonomischer und werterhaltender Weise erfaßt. Insbesondere soll die Zubereitung empfindlicher Lebensmittel im Sinne modernster sowie traditioneller Erkenntnisse entsprechend der ernährungsphysiologischen Wertigkeit so erfolgen, wie es lebensmitteltechnisch, hygienisch und organisatorisch am vorteilhattesten ist.

Hauptmerkmale der Erfindung sind in den Ansprüchen 1 und 9 bis 11 angegeben. Ausgestaltungen sind Gegenstand der Ansprüche 2 bis 8 und 12 bis 19.

Das Prinzip des in Anspruch 1 dargelegten erfindungsgemäßen Arbeitsmittelsystems für die Lebensmittel-Zubereitung besteht darin, daß einer Grundplatte in variabler oder ortfester Aufstellung als Sammelebene eine Arbeitsplatte als Arbeitsebene übergeordnet ist, z.B. auf einem Untergestell oder auf Abstandhaltern, mit Durchfallöffnungen und/oder seitlich offenen Durchfallausnehmungen für Schnittgut und Abfall, unter denen auf der Grundplatte Auffangschalen aufstelltbar sind und in deren Zugriffsbereich sich ein Greifbehälter für Schneid-und Zerkleinerungs-Utensilien befindet, beispielsweise eine Schublade oder ein Wandregalteil.

Wichtige Vorteile des Arbeitsmittelsystems für die Lebensmittel-Zubereitung nach der Erfindung beruhen darauf, daß die Vorbereitungs-, Schneid- und Sammelvorgänge in Form und Anordnung zueinander eine systembedingte Arbeitsmethodik vorgeben. Die kompakte ergonomische Zusammenfassung aller Vorgänge zur Zurichtung von Gemüse, Obst u.dgl., aber auch von Fisch, Fleisch, Geflügel usw. in einem Systemgerät ermöglicht das Zerkleinern, Selektieren und definierte Sammeln des bearbeiteten Gutes und die hygienische Beseitigung von Abfall in einem kombinierten Arbeitsgang. Dadurch wird das Zurichten erheblich rationalisiert und vereinfacht. Das neuartige Arbeitsmittelsystem zwingt zu einem naturgemäßeren Umgang mit den wertvollen Rohmaterialien und befreit diese Arbeit von ihrem herkömmlichen Nebensächlichkeits-Charakter.

Eine zweckmäßige Ausführungsform für die ortsfeste Aufstellung ist nach Anspruch 2 so gestaltet, daß eine Durchfallöffnungen aufweisende, mit einer Randleiste zumindest teilweise eingefaßte, im wesentlichen rechteckige Arbeitsplatte auf einem Untergestell aus waagrechten Tragholmen mit senkrecht abgewinkelten Standfüßen befestigt und durch einen in Quernuten in einem mit einer Wand oder mit einem Küchenmöbel verschraubten C-förmigen Basisrahmen eingehängten Tragholm gegen Verschieben gesichert ist, wobei unter den Durchfallöffnungen in der Arbeitsplatte auf einer als Grundplatte und damit als Sammelebene dienenden Möbelfläche Auffangschalen für Schnittgut und Abfall aufgestellt sind und wobei auf den C-förmigen Basisträger ein Wandregalteil mit Halterungen für Schneid- und Zerkleinerungs-Utensilien aufgesetzt ist, das an seiner Vorderseite bei Nichtbenutzung die senkrecht gestellte Arbeitsplatte mit ihrem Untergestell aufnimmt.

Vorteilhaft ist die Ausbildung gemäß Anspruch 3, wonach die Durchfallöffnungen in der Arbeitsplatte für das Schnittgut und für den Abfall trichterartig ausgeführt sind, bevorzugt mit schrägliegenden Innenseitenflächen.

Dem Bestreben einer sparsamen und auch zweckmäßigen Verwendung von Verpackungsmaterialien entspricht es, daß nach Anspruch 4 als Auffangschalen für Schnittgut und Abfall handelsübliche Hartschaumstoff-Körper in stapelfähiger und paarweise als Ober- und Unterteil zu Behältnissen zusammensetzbarer Form verwendet werden. Alternativ kann man irdene oder Glas-Gefäße benutzen.

Die Zubereitungsmöglichkeiten einer Arbeitsplatte werden nach Anspruch 5 erweitert, wenn sie insbesondere neben dem Haupt-Arbeitsbereich mit einer kalottenförmigen Einsenkung versehen ist, die z.B. zu zerkleinernde oder zerkleinerte Küchenkräuter aufnehmen kann. Von besonderem Vorteil ist die in Anspruch 6 angegebene Ausgestaltung, wonach in der Arbeitsebene oder in wenigstens einer Durchfallöffnung ein herausnehmbarer Schneid- und/oder Reibeinsatz vorgesehen ist. Durch einfaches und rasches Wechseln der Einsätze lassen sich die unterschiedlichsten Bearbeitungsvarianten erzielen.

Eine arbeitstechnisch günstige Ergänzung wird nach Anspruch 7 dadurch erreicht, daß in dem auf den C-förmigen Basisträgern aufgesetzten Wandregalteil neben den Halterungen für Schneid- und Zerkleinerungs-Utensilien auch Halterungen für diverses Rollenmaterial, wie Frischhalte- und Backfolie, vorhanden sind. Alternativ können gemäß Anspruch 8 die wichtigsten und am häufigsten gebrauchten Arbeitsutensilien in einem an dem C-förmigen Basisträgern oder an einer Arbeitsplattenkante befestigten Messerblock aufbewahrt werden. Ständig benötigte Arbeitsgeräte wie Schneid- und Zerkleinerungs-Utensilien sind auf diese Weise sauber zur Hand und schnell griffbereit.

Für die Systeme der Ansprüche 9 bis 11 wird selbständiger Schutz beansprucht. Namentlich zur variablen Aufstellung des Arbeitsmittelsystems ist laut Anspruch 9 vorgesehen, daß eine vorzugsweise vier nach innen angeschrägte Durchfallöffnungen mit darunterstehenden Auffangschalen aufweisende, mit einer obenseitigen Randleiste versehene, z.B. etwa quadratische Arbeitsplatte auf einem kreuzförmigen Untergestell befestigt ist, dessen runde Grundplatte in Verbindung mit einem Tellerkugellager gegenüber eine Bodenplatte mit rutschfester Unterseite drehbar und mit einer Rastvorrichtung feststellbar gelagert ist.

Alternativ kann das Arbeitsmittelsystem nach Anspruch 10 so gestaltet sein, daß auf oder über einer Grundplatte mit rutschfester Unterseite eine Arbeitsplatte mit rechteckiger Vorderfläche und halbkreisförmiger Rückenfläche angeordnet ist, an deren geraden Seitenkanten und an deren halbkreisförmiger Rückenkante eine durch verschiebbare Trennscheiben in Sammelabschnitte abteilbare, U-förmige Aufnahmerinne formschlüssig angesetzt ist

Eine weitere eigenständige Konstruktion insbesondere zur variablen Aufstellung des Arbeitsmittelsystems ergibt sich nach Anspruch 11 dadurch, daß die Arbeitsplatte eine von einem Rechteck abgeleitete symmetrische Form mit abgerundeten oder angeschrägten Ecken und seitlich offenen Durchfallausnehmungen mit darunterstehenden Auffangschalen sowie Durchfallöffnungen in der Form von Durchbrüchen mit darunterstehenden Auffangschalen aufweist und auf Standbeinen abgestützt ist, insbesondere auf höhenverstellbaren mit Saugfüßen versehenen Teleskopsäulen.

Gemäß Anspruch 12 kann das Arbeitsmittelsystem mit höhenverstellbarer Arbeitsplatte auch für Einbauküchen in der Form vorteilhaft angewendet werden, daß eine z.B. durch höhenverstellbare Teleskopsäulen auf einer Grundplatte befestigte Arbeitsplatte zusammen mit letzterer in Teleskop-Ausziehschienen in einem Küchenmöbelteil ein- und ausschiebbar sowie in Verbindung mit einer Küchenarbeitsplatte höhenverstellbar angeordnet ist.

Eine sehr zweckmäßige Ausführung besteht laut Anspruch 13 darin, daß eine mit seitlich offenen Durchfallausnehmungen ausgebildete, etwa quadratische Arbeitsplatte mit einem kreuzförmigen Untergestell aus Hochkantleisten auf einer ebenfalls quadratischen, etwas größeren und mit einem erhöhten Rand versehenen Grundplatte befestigt ist, wobei der Mittelteil des Untergestells in parallelen Hochkantleisten eine Schublade für Zerkleinerungs-Utensilien aufnimmt. Allgemein ist es vorteilhaft, wenn im Einklang mit Anspruch 14 für die Bereitstellung der Schneid- und Zerkleinerungs-Utensilien Regalteile, Schubladen oder ein austeckbarer Messerblock eingesetzt sind.

Eine erhebliche Arbeits-Erleicherung sieht Anspruch 15 vor, indem eine Arbeitsplatte und/oder eine Grundplatte ganz oder teilweise mit einer Randleiste eingefaßt sind, welche die Arbeitsebene der Arbeitsplatte und die Sammelebene der Grundplatte wallartig eingrenzt, so daß das bearbeitende Gut im Zubereitungs-Bereich bleibt und unbeabsichtigter Abfall weitestgehend vermieden wird. Nach Anspruch 18 ermöglicht ein vorzugsweise runder Schneidbretteinsatz mit einem zentrisch angeordneten, herausnehmbaren Schneid- und/oder Reibeinsatz und darunterstehender Auffangschale das rasche und sichere Zerraspeln oder Zerschneiden von Gemüse, Kartoffeln u.dgl. Das Schneidgut gelangt in die Auffangschale, die durch Herausheben des Schneidbretteinsatzes entnommen werden kann, der sich nach Bedarf wenden oder austauschen läßt. Ein lästiges, leicht zu Schnittverletzungen führendes Verrutschen des Schneid- und/oder Reibeinsatzes ist wirksam vermieden.

Nach Anspruch 17 liegt es auch im Sinne der Erfindung, daß eine Arbeitsplatte mit dem Untergestell durch Steckdübel auf einem fahrbaren Unterschrank, einem Küchenmöbel oder Küchengerät, insbesondere auf einem Kühlschrank, befestigt ist. Das Gerät kann also mit im Hause vorhandenen Einrichtungen auf einfache Weise kombiniert werden.

Zur Nutzung der Vorteile des Arbeitsmittelsystems neben der Gemüsezubereitung auch bei anderen Zubereitungsarbeiten ist es nach Anspruch 18 günstig, wenn die Ober- und Unterseite einer Arbeitsplatte für die unterschiedliche Zubereitungen ausgebildet sind, z.B. für die Verarbeitung von Fisch, Fleisch, Geflügel usw. einerseits und für die Verarbeitung von Gemüse, Beilagen und/oder Pasta andererseits.

Um Durchfeder- und Dröhneffekte an der Arbeitsplatte bei intensiven Zerkleinerungsarbeiten zu vermeiden sowie zum Schutz gegen Verrottung ist es in extremen Fällen der Beanspruchung mitunter zweckmäßig, wenn die Unterseite einer Arbeitsplatte nach Anspruch 19 durch elastisch-nachgiebige Polster geschützt ist.

Weitere Merkmale, Einzelheiten und Vorteile der Erfindung ergeben sich aus dem Wortlaut der Patentansprüche sowie aus den folgenden Erläuterungen von Ausführungsbeispielen anhand der Zeichnungen. Darin zeigen:
- Fig. 1: eine Schrägansicht eines Arbeitsmittelsystems mit Durchfallöffnungen für variable Aufstellung;
- Fig. 2: eine Draufsicht auf eine Grundplatte eines Arbeitsmittelsystems im Querschnitt, ebenfalls für variable Aufstellung, mit seitlichen Durchfallausnehmungen;
- Fig. 3: eine Draufsicht auf eine Arbeitsplatte entsprechend Fig. 2;
- Fig. 4: eine Schrägansicht eines Untergestells zu Fig. 2;
- Fig. 5: eine Vorderansicht zu Fig. 3;
- Fig. 6: eine Draufsicht auf ein Arbeitsmittelsystem für ortsfester Anbringung;
- Fig. 7: eine Vorderansicht zu Fig. 6;
- Fig. 8: eine andere Vorderansicht zu Fig. 6 mit aufgesetztem und gefülltem Wandregalteil;
- Fig. 9: eine Schrägansicht zu Fig. 6;
- Fig. 10: eine schematisch dargestellte Einzelheit aus Fig. 9 bei hochgestellter Arbeitsplatte;
- Fig. 11: eine Draufsicht auf eine quadratische Arbeitsplatte mit kreuzförmigem Untergestell für variable Aufstellung;
- Fig. 12: eine Vorderansicht zu Fig. 11;
- Fig. 13: eine Draufsicht auf eine Arbeitsplatte mit U-förmiger Aufnahmerinne für variable Aufstellung;
- Fig. 14: eine Vorderansicht zu Fig. 13;
- Fig. 15: eine Draufsicht auf eine Arbeitsplatte auf Standbeinen mit seitlich offenen Durchfallausnehmungen und Durchfallöffnungen;
- Fig. 16: eine Vorderansicht zu Fig. 15;
- Fig. 17: eine Vorderansicht eines Arbeitsmittelsystems in einem ortsfesten Unterschrank;
- Fig. 18: eine Vorderansicht eines Arbeitsmittelsystems auf bzw. in einem fahrbaren Unterschrank und
- Fig. 19: eine Draufsicht auf eine Arbeitsplatte mit einem Schneid bzw. Reibeinsatz.

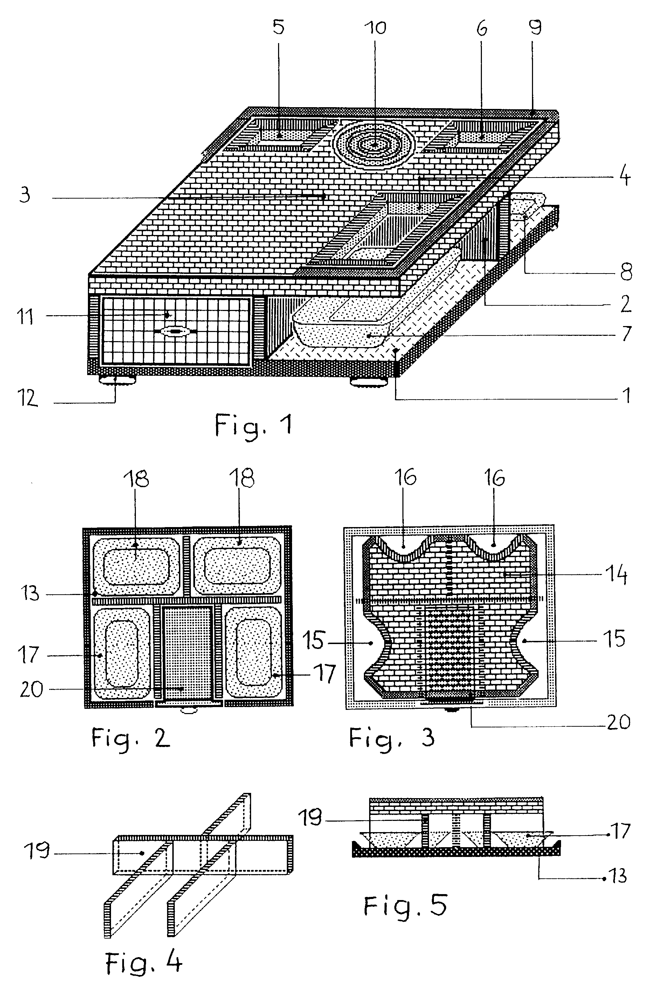

In Fig. 1 ist das grundsätzliche Prinzip eines Arbeitsmittelsystems für variable Aufstellung gezeigt. Es besteht aus einer im wesentlichen quadratischen Grundplatte 1 als Sammelebene und einem darauf befestigten kreuz- oder T-förmigen Untergestell 2 als Abstandhalter, an dem eine Arbeitsplatte 3 als Arbeitsebene fest angebracht ist. Die Arbeitsplatte 3 hat eine große Durchfallöffnung 4 für Schnittgut sowie zwei kleinere Durchfallöffnungen 5 und 6 für Abfall, der beim Zubereitungsvorgang entsteht. Unter der größeren Durchfallöffnung 4 befindet sich auf der Grundplatte 1 bzw. Sammelebene eine entsprechend große Auffangschale 7 zum Sammeln des Schnittgutes. Auffangschalen 8 zum Sammeln des Abfalls stehen unter den kleineren Durchfallöffnungen 5 und 6.

Der Oberflächen-Bereich der Arbeitsplatte 3 zwischen den Durchfallöffnungen 4, 5 und 6 stellt die Arbeitsebene dar, auf der die Zubereitungsarbeiten durchgeführt werden, z.B. das Trennen der Bestandteile in Schnittgut und Abfall, ferner Arbeiten wie Schaben, Schnitzeln, Würfeln u.dgl. Zum Schutz gegen Herunterfallen von Lebensmittel-Bestandteilen faßt eine Randleiste 9 die Arbeitsebene der Arbeitsplatte 3 zumindest teilweise ein, während ihre vordere Seite zur besseren Handhabung z.B. der Schneidmesser freigelassen sein kann.

Die verarbeiteten Bestandteile, die vom Zubereiter in die trichterartige, schräge Durchfallöffnung 4 geschoben und in der größeren Auffangschale 7 gesammelt werden, stehen so zur unmittelbaren Verwendung, zum Transport oder zur Aufbewahrung zur Verfügung. Als Auffangschalen 7 und 8 für Schnittgut bzw. Abfall kann man handelsübliche, Keramik- oder Glasgefäße, aber auch wiederverwendbare Hartschaum-Schalen (z.B. aus Styropor) verwenden, die stapelfähig und paarweise als Ober- und Unterteil zu Behältnissen zusammensetzbar sind. Da mit der Zubereitung meistens auch die Bearbeitung, z.B. das Zerkleinern von Beilagen wie Küchenkräutern verbunden ist, hat die Oberseite der Arbeitsplatte 3 zur Aufnahme dieser Beilagen eine kalottenförmige Einsenkung 10. Damit ferner die erforderlichen Zerkleinerungs-Utensilien immer griffbereit sind, ist z.B. in das linke Fach des Untergestells 2 eine Schublade 11 eingesetzt. Zur sicheren Aufstellung kann das Gerät an der Unterseite der Grundplatte 1 rutschsichere Gummischeiben 12 haben.

In den Beispielen der Fig. 2 bis 5 hat das Zubereitungsgerät für variable Aufstellung ebenfalls eine etwa quadratische Grundplatte 13, die mit erhöhtem Rand versehen sein kann, sowie eine Arbeitsplatte 14, die anstelle von Durchfallöffnungen seitlich offene Durchfallausnehmungen 15, 16 mit angeschrägten Seitenflächen hat, über die Schnittgut bzw. Abfall in darunterstehende Auffangschalen 17 bzw. 18 geschoben werden kann. Der Zwischenraum zwischen der Grundplatte 13 und der Arbeitsplatte 14 enthält hier ein kreuzförmiges Untergestell 19, das in seinem Mittelteil eine Schublade 20 aufnehmen kann.

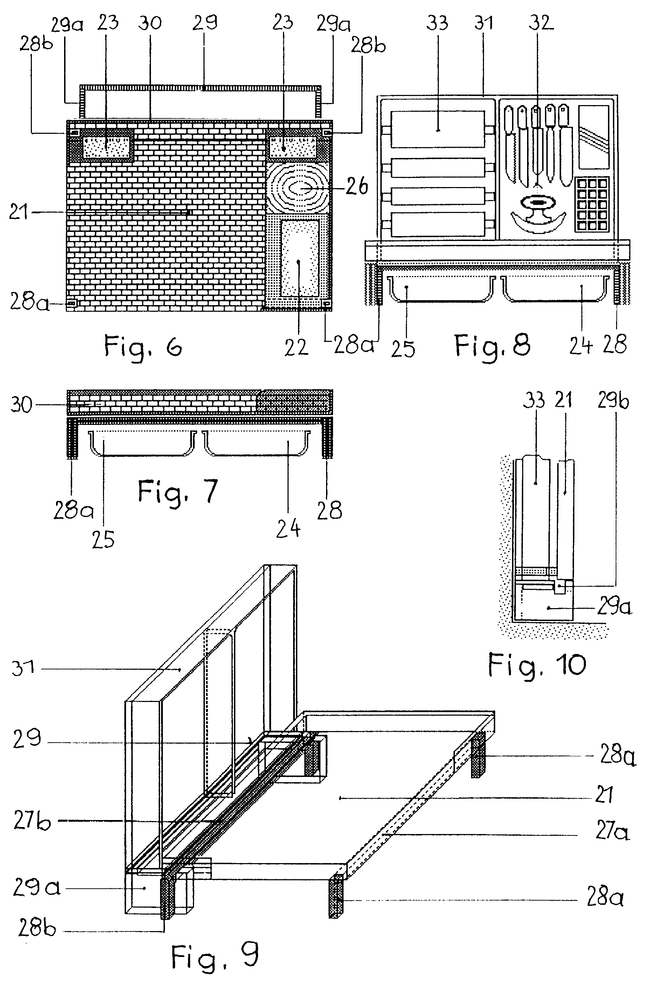

Fig. 6 bis 10 zeigen ein Arbeitsmittelsystem für ortsfeste Aufstellung. Es besteht aus einer Arbeitsplatte 21 mit einer an der rechten vorderen Ecke vorhandenen Durchfallöffnung 22 in Form einer trichterartigen Ausnehmung, in die Schnittgut eingeschoben werden kann, das in eine darunterstehende Auffangschale 24 fällt. Zwei kleinere, an der Arbeitsplatte 21 hinten vorgesehene, ebenfalls trichterartig ausgesparte Durchfallöffnungen 23 sind für die Durchgabe von anfallendem Abfall in darunterstehende Auffangschalen 25 bestimmt. Zwischen den beiden rechten Durchfallöffnungen 22 und 23 befindet sich eine kalottenförmige Einsenkung 26, in der z.B. Küchenkräuter etwa mit einem Wiegemesser zerkleinert und gelagert werden können.

Der übrige Teil der Arbeitsplatte 21 stellt die eigentliche Arbeitsebene dar. Die Arbeitsplatte 21 ist auf zwei waagrechten Tragholmen 27a, 27b befestigt, die senkrecht abgewinkelte Standfüße 28a, 28b haben. Dadurch wird der Abstand zwischen der Standfläche auf dem Möbelteil, die hier die Grundplatte bildet, und der Arbeitsplatte 21 hergestellt, der für die unterzuschiebenden Auffangschalen 24, 25 erforderlich ist. Die Tragholme 27a, 27b mit den Standfüßen 28a bzw. 28b bilden das Untergestell der Arbeitsplatte 21, das bei der dieser Ausführung aus Vierkantrohr bestehen kann. Gehalten wird die Arbeitsplatte 21 von einem C-förmigen, z.B. mit einer Gebäudewand verschraubten Basisträger 29, in dessen Seitenschenkel 29a Quernuten 29b eingelassen sind, in die der hintere Tragholm 27b des Untergestells eingehakt ist. Die Arbeitsplatte 21 kann zur Eingrenzung des Schneidgutes mit einer Randleiste 30 eingefaßt sein. Auf den Basisträger 29 ist der Wandregalteil 31 aufgesetzt, in dem Schneid- und Zerkleinerungs-Utensilien 32 und diverses Rollenmaterial 33 leicht greifbar untergebracht sind und an dem auch ein Messerblock M angebracht sein kann (vergl. Fig.6). Bei Nichtbenutzung des Arbeitsmittelsystems kann die Arbeitsplatte 21 hochgestellt werden (Fig. 9 und 10).

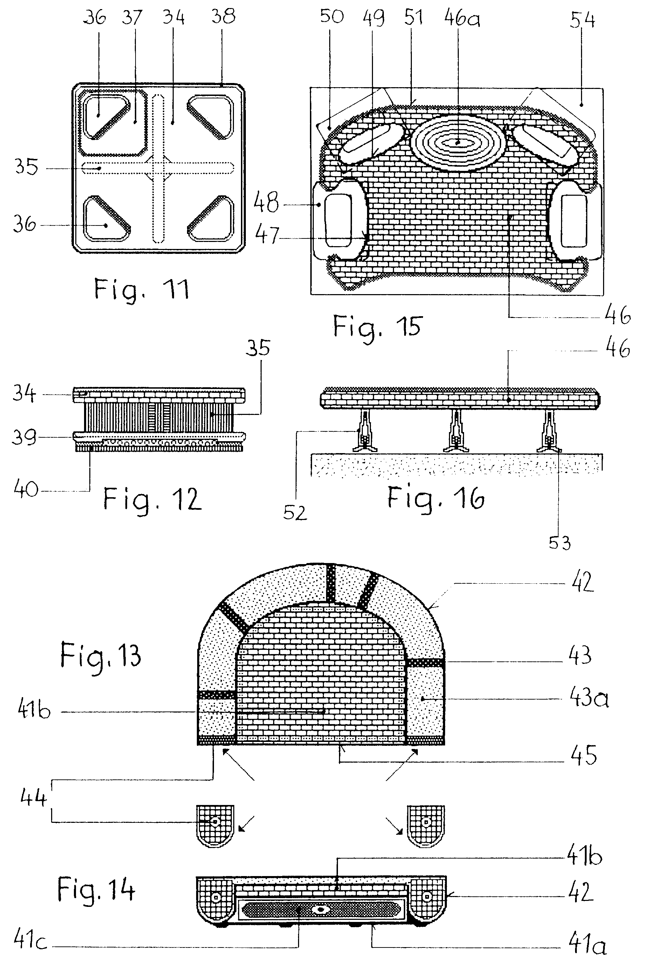

Die in Fig. 11 und 12 dargestellte, im wesentlichen quadratische Arbeitsplatte 34 mit kreuzförmigem Untergestell 35 für variable Aufstellung hat in symmetrischer Anordnung vier dreieckförmige Durchfallöffnungen 36, die zur Plattenmitte hin trichterartig angeschrägt sind. In die Zwischenräume des Untergestells 35 sind entsprechende Auffangschalen 37 einzusetzen. An der Arbeitsplatte 34 wird das Schnittgut durch eine Randleiste 38 gegen Herunterfallen gesichert. Das Untergestell 35 ist auf einer Grundplatte 39 befestigt, die in Verbindung mit einem Tellerkugellager auf einer Bodenplatte 40 drehbar und durch eine Rastvorrichtung feststellbar gelagert ist. Alternativ können Distanzhalter zwischen der Arbeits-und der Sammelebene angeordnet sein; das Untergestell 35 kann auch durch z.B. drei Standbeine ersetzt sein.

Im Beispiel der Fig. 13 und 14 ist eine Arbeitsplatte 41b mit rechteckiger Vorderfläche und etwa halbkreisförmiger Rückenfläche dargestellt, die auf einer Grundplatte 41a mit rutschfester Unterseite zur variablen Aufstellung angeordnet ist. An die beiden geraden Seitenkanten und an die halbkreisförmige Rückenkante der Arbeitsplatte 41b ist eine U-förmige Aufnahmerinne 42 formschlüssig angesetzt, in die Schnittgut und Abfall geschoben werden kann. Dazu ist diese U-förmige Aufnahmerinne 42 durch verschiebbare bzw. in verschiedenen Stellungen einsteckbare Trennscheiben 43 in einzelne Sammelabschnitte 43a unterteilbar. An den beiden Enden der Aufnahmerinne 42, die von Endscheiben 44 verschlossen sind, lassen sich (hier nicht dargestellt) Auffangschalen aufstellen. Nach Herausnahmen der Endscheiben 44 und der betreffenden Trennscheiben 43 kann man Schnittgut und Abfall z.B. mit einem Spatel in die Auffangschalen schieben. Die U-förmige Aufnahmerinne 42 verhindert in ihrem Bereich das Herunterfallen des Schnittgutes. Bei Bedarf kann vorn eine Randleiste 45 vorgesehen oder auch nachträglich angebracht werden.

Eine in Fig. 15 und 16 gezeichnete Arbeitsplatte 46 für variable Aufstellung hat seitlich offene Durchfallausnehmungen 47 für Schnittgut, das in einer Auffangschale 48 gesammelt wird, und zwei hintere Durchfallöffnungen 49 für Abfälle, die in Auffangschalen 50 gelangen. Diese Ausführungsform ist besonders für verhältnismäßig grob zu schnitzelndes Gemüse geeignet. Nach vorn und nach hinten ist die Arbeitsplatte 46 von Randleisten 52 begrenzt; sie kann zwischen den Durchfallöffnungen 49 eine kalottenförmige Einsenkung 46a zum Zerkleinern und Lagern von Küchenkräutern haben. Als Untergestell werden höhenverstellbare Teleskopsäulen 52 verwendet, die zweckmäßig mit Saugfüßen 53 auf der Grundplatte 54 anbringbar sind.

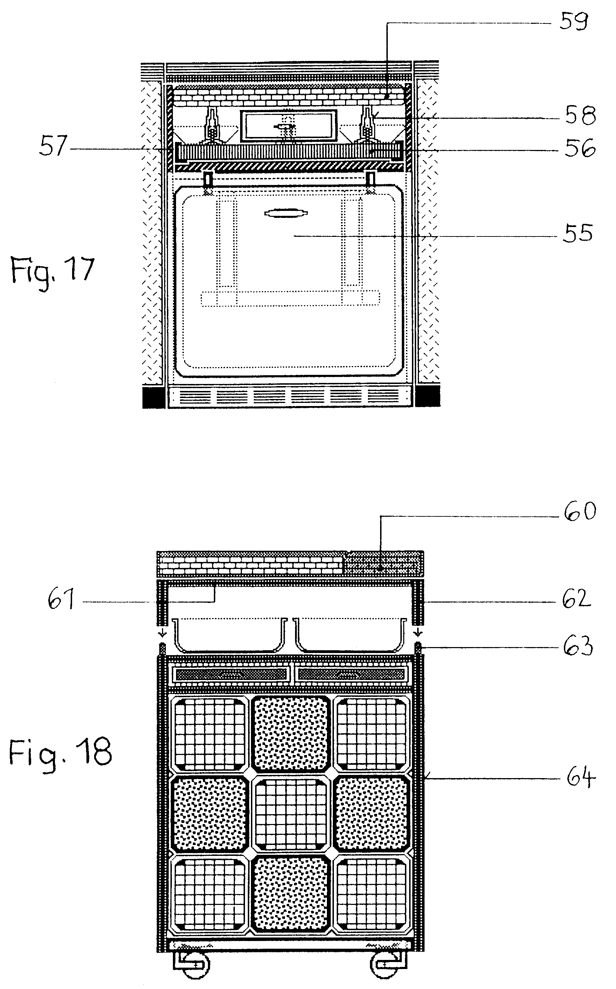

In Fig. 17 ist ein Arbeitsmittelsystem für die Lebensmittel-Zubereitung in ein Möbelteil 55 einer Einbauküche nach Art eines Kühlschrankes eingesetzt. Zu diesem Zweck ist eine Grundplatte 56 in Telekopschienen 57 aus- und einschiebbar gelagert. Auf der Grundplatte 56 befinden sich höhenverstellbare Teleskopsäulen 58, welche eine rechteckige Arbeitsplatte 59 tragen. Durch einen Schnappverschluß zwischen den Telekopsäulen 58 und der Arbeitsplatte 59 kann deren Unterseite, die z.B. als Pastaplatte ausgebildet ist, nach oben gewendet werden. Diese zusätzliche Verwendungsmöglichkeit erlaubt auch verschiedene Bearbeitungen unterschiedlicher Lebensmittel wie Fisch, Fleisch, Geflügel usw. einerseits und Gemüse, Beilagen, Teigwaren (Pasta) u.dgl. andererseits. Mittels eines (nicht dargestellten) Hubmechanismus ist es auch möglich, das Arbeitsmittelsystem hochzufahren.

Bei einer Variante gemäß Fig. 18 ist das Arbeitsmittelsystem in der Form einer Arbeitsplatte 60 auf Tragholmen 61 mit abgewinkelten Standfüßen 62 durch Steckdübel 63 auf einem fahrbaren Unterschrank 64 befestigt.

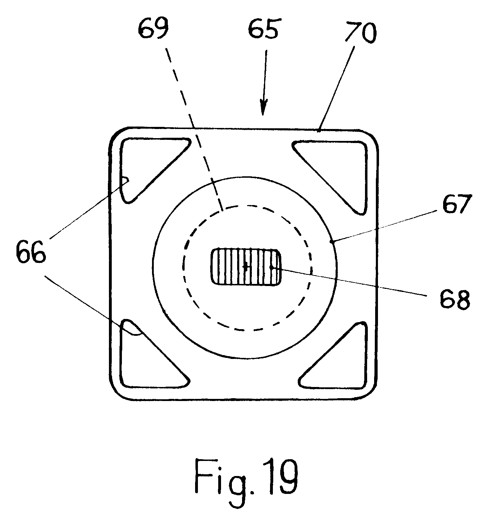

Im Beispiel der Fig. 19 ist die im wesentlichen quadratische Arbeitsplatte 65 von einer Randleiste 70 eingefaßt und mit dreiecksförmigen Durchfallöffnungen sowie mit einem Schneidbretteinsatz 67 versehen, der seinerseits einen Schneid-bzw. Reibeinsatz 68 aufnimmt. Darunter befindet sich ein herausnehmbarer Auffangbehälter 69. Wie bei allen anderen Ausführungsbeispielen kann auch hier die Arbeitsebene mit einem austauschbaren Schneidbrett (hier Einsatz 67) aus Holz oder Kunststoff versehen sein, das oval, kreisrund oder anders gestaltet sein und bei Bedarf gewendet werden kann.

Die Erfindung ist nicht auf die dargestellten Ausführungsformen beschränkt, vielmehr sind zahlreiche Abwandlungen und Ausgestaltungen möglich. Man erkennt jedoch, daß ein Arbeitsmittelsystem für die Lebensmittel-Zubereitung erfindungsgemäß auf einer Grundplatte 1, 13 für variable oder ortsfeste Aufstellung eine Sammelebene, ein Untergestell 2, 19 als Abstandhalter und darauf eine Arbeitsplatte 3, 14 als Arbeitsebene hat. Die Arbeitsplatte 3, 14 weist Durchfallöffnungen 4, 5, 6 und /oder seitlich offene Durchfallausnehmungen 15, 16 für Schnittgut und für Abfall auf, unter denen auf der Grundplatte 1, 13 Auffangschalen 7, 8; 17, 18 aufstellbar sind und in deren Zugriffsbereich sich eine Schublade 11, 20, ein Messerblock M oder ein Wandregalteil 31 mit Schneid-und Zerkleinerungs-Utensilien befindet. Das System eignet sich zur freien Aufstellung, aber auch zum Einbau in Möbelteile bzw. -fronten. Bei Wandbefestigung kann die Arbeitsplatte 21 hochklappbar sein (Fig. 9 und 10). Ein Schneidbretteinsatz 67 aus Holz oder Kunststoff läßt sich nach Bedarf wenden oder austauschen.

Sämtliche aus den Ansprüchen, der Beschreibung und der Zeichnungen hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

### Fig. 1

- 1: Grundplatte
- 2: Untergestell
- 3: Arbeitsplatte
- 4: Durchfallöffnung für Schnittgut
- 5: Durchfallöffnung für Abfall
- 6: Durchfallöffnung für Abfall
- 7: Auffangschale für Schnittgut
- 8: Auffangschale für Abfall
- 9: Randleiste
- 10: kalottenförmige Einsenkung
- 11: Schubalde
- 12: Gummischeibe

### Fig. 2 bis 5

- 13: Grundplatte
- 14: Arbeitsplatte
- 15: Durchfallausnehmung für Schnittgut
- 16: Durchfallausnehmung für Abfall
- 17: Auffangschale für Schnittgut
- 18: Auffangschale für Abfall
- 19: kreuzförmiges Untergestell
- 20: Schublade

### Fig. 6 bis 10

- 21: Arbeitsplatte
- 22: Durchfallöffnung für Schnittgut
- 23: Durchfallöffnung für Abfall
- 24: Auffangschale für Schnittgut
- 25: Auffangschale für Abfall
- 26: kalottenförmige Einsenkung
- 27a, 27b: Tragholme
- 28a, 28b: Standfüße
- 29: C-förmiger Basisträger
- 29a: Seitenschenkel
- 30: Randleiste
- 31: Wandregalteil
- 32: Schneid- und Zerkleinerungs-Utensilien
- 33: Rollenmaterial

### Fig. 11 und 12

- 34: quadratische Arbeitsplatte
- 35: kreuzförmiges Untergestell
- 36: dreieckförmige Durchfallöffnungen
- 37: Auffangschale
- 38: Randleiste
- 39: Grundplatte
- 40: Bodenplatte

### Fig. 13 und 14

- 41a: Grundplatte
- 41b: Arbeitsplatte
- 42: U-förmige Aufnahmerinne
- 43: Trennscheiben
- 43a: Sammelabschnitt
- 44: Endscheiben
- 45: Randleiste

### Fig. 15 und 16

- 46: Arbeitsplatte
- 46 a: kalottenförmige Einsenkung
- 47: Durchfallausnehmung für Schnittgut
- 48: Auffangschale für Schnittgut
- 49: Durchfallöffnungen für Abfall
- 50: Auffangschale für Abfall
- 51: Randleiste
- 52: Teleskopsäule
- 53: Saugfuß
- 54: Grundplatte

### Fig. 17 und 18

- 55: Möbelteil
- 56: Grundplatte
- 57: Teleskopschiene
- 58: Teleskopsäule
- 59: Arbeitsplatte
- 60: Arbeitsplatte
- 61: Tragholm
- 62: Standfuß
- 63: Steckdübel
- 64: fahrbarer Unterschrank

### Fig. 19

- 65: Arbeitsplatte
- 66: Durchfallöffnungen
- 67: Schneidbretteinsatz
- 68: Schneid-/Reibeinsatz
- 69: Auffangbehälter
- 70: Randleiste / Einfassung

## Patentansprüche

1. Arbeitsmittelsystem für die Lebensmittel-Zubereitung, mit einer stand-oder verschiebungsfest auf einem tisch-, schrank- oder regalartigen Küchenmöbel angeordneten Arbeitsplatte, mit Behältnissen für die Aufnahme des bearbeiteten Gutes sowie mit einer Anordnung für Schneid- und Zerkleinerungs-Utensilien, dadurch **gekennzeichnet**, daß einer Grundplatte (1, 13) in variabler oder ortsfester Aufstellung als Sammelebene eine Arbeitsplatte (3, 14) als Arbeitsebene übergeordnet ist, z.B. auf einem Untergestell (2, 19) oder auf Abstandshaltern, mit Durchfallöffnungen (4, 5, 6) und/oder seitlich offenen Durchfallausnehmungen (15, 16) für Schnittgut und Abfall, unter denen auf der Grundplatte (1, 13) Auffangschalen (7, 8, 17, 18) aufstelltbar sind und in deren Zugriffsbereich sich ein Greifbehälter (11, 20; 31) für Schneid- und Zerkleinerungs-Utensilien befindet.

2. Arbeitsmittelsystem nach Anspruch 1, dadurch **gekennzeichnet**, daß eine Durchfallöffnungen (22, 23) aufweisende, mit einer Randleiste (30) zumindest teilweise eingefaßte rechteckige Arbeitsplatte (21) auf einem Untergestell aus waagrechten Tragholmen (27a, 27b) mit senkrecht abgewinkelten Standfüßen (28a, 28b) befestigt und durch einen in einer Quernut (29b) in einem mit einer Wand oder mit einem Küchenmöbel verschraubten C-förmigen Basisträger (29) eingehängten Tragholm (27b) gegen Verschieben gesichert ist, wobei unter den Durchfallöffnungen (22, 23) in der Arbeitsplatte (21) auf einer als Grundplatte und damit als Sammelebene dienenden Möbelfläche Auffangschalen (24, 25) für Schnittgut und Abfall aufgestellt sind und wobei auf den C-förmigen Basisträger (29) ein Wandregalteil (31) mit Halterungen für Schneid- und Zerkleinerungs-Utensilien (32) aufgesetzt ist, das an seiner Vorderseite bei Nichtbenutzung die senkrecht gestellte Arbeitsplatte (21) mit ihrem Untergestell aufnimmt.

3. Arbeitsmittelsystem nach Anspruch 1 oder 2, dadurch **gekennzeichnet**, daß die Durchfallöffnungen (4, 5, 6) und die seitlich offenen Durchfallausnehmungen (15, 16) in einer Arbeitsplatte (3, 14) für das Schnittgut und für den Abfall trichterartig ausgeführt sind, bevorzugt mit schrägliegenden Innenseitenflächen.

4. Arbeitsmittelsystem nach einem der Ansprüche 1 bis 3, dadurch **gekennzeichnet**, daß die Auffangschalen (7, 8, 22, 23, 69) handelsübliche Hartschaumstoff-Körper sind, die stapelfähig und paarweise als Ober- und Unterteil zu Behältnissen zusammensetzbar sind.

5. Arbeitsmittelsystem nach einem der Ansprüche 1 bis 4, dadurch **gekennzeichnet**, daß eine Arbeitsplatte (3,21) neben der Arbeitsebene mit einer kalottenförmigen Einsenkung (10, 26) z.B. für zu zerkleinernde oder zerkleinerte Küchenkräuter versehen ist.

6. Arbeitsmitelsystem nach einem der Ansprüche 1 bis 5, dadurch **gekennzeichnet**, daß in der Arbeitsebene (3, 21) oder in wenigstens einer Durchfallöffnung (4, 5, 6) ein herausnehmbarer Schneid- und/oder Reibeinsatz (68) vorgesehen ist.

7. Arbeitsmittelsystem nach einem der Ansprüche 2 bis 6, dadurch **gekennzeichnet**, daß in dem auf den C-förmigen Basisträger (29) aufgesetzten Wandregalteil (31) neben Halterungen für Schneid- und Zerkleinerungs-Utensilien (32) auch Halterungen für diverses Rollenmaterial (33), wie Frischhalte- oder Backofenfolie, vorhanden sind.

8. Arbeitsmittelsystem nach einem der Ansprüche 2 bis 7, dadurch **gekennzeichnet**, daß an dem C-förmigen Basisträger (29) oder an einer Außenkante der Arbeitspaltte (3, 14 usw.) ein Messerblock (M, Fig. 6) befestigt oder befestigbar ist.

9. Arbeitsmittelsystem für die Lebensmittel-Zubereitung, namentlich für variable Aufstellung, mit einer stand- und verschiebungsfest auf einem tisch-, schrank- oder regalartigen Möbel angeordneten Arbeitsplatte, insbesondere nach einem der Ansprüche 1 bis 8, dadurch **gekennzeichnet**, daß eine vorzugsweise vier nach innen angeschrägte Durchfallöffnungen (36) mit darunterstehenden Auffangschalen (37) aufweisende, mit einer obenseitigen Randleiste (38) versehene, z.B. quadratische Arbeitsplatte (34) auf einem Untergestell (35) befestigt ist, dessen runde Grundplatte (39) in Verbindung mit einem Tellerkugellager gegenüber einer Bodenplatte (40) mit rutschfester Unterseite drehbar und mit einer Rastvorrichtung feststellbar gelagert ist.

10. Arbeitsmittelsystem für die Lebensmittel-Zubereitung, namentlich für variable Aufstellung, mit einer stand- und verschiebungsfest auf einem tisch-, schrank- oder regalartigen Möbel angeordneten Arbeitsplatte, insbesondere nach einem der Ansprüche 1 bis 9, dadurch **gekennzeichnet**, daß auf oder über einer Grundplatte (41a) mit rutschfester Unterseite eine Arbeitsplatte (41b) mit rechteckiger Vorderfläche und halbkreisförmiger Rückenfläche angeordnet ist, an deren geraden Seitenkanten und an deren halbkreisförmiger Rückenkante eine durch verschiebbare Trennscheiben (43) in Sammelabschnitte (43a) abteilbare U-förmige Aufnahmerinne (42) formschlüssig angesetzt ist.

11. Arbeitsmittelsystem für die Lebensmittel-Zubereitung, namentlich für variable Aufstellung, mit einer stand- und verschiebungsfest auf einem tisch-, schrank- oder regalartigen Möbel angeordneten Arbeitsplatte, insbesondere nach einem der Ansprüche 1 bis 10, dadurch **gekennzeichnet**, daß die Arbeitsplatte (46) eine von einem Rechteck abgeleitete symmetrische Form mit abgerundeten oder angeschrägten Ecken und seitlichen offenen Durchfallausnahmungen (47) mit darunterstehenden Auffangschalen (48) sowie Durchfallöffnungen (49) in Form von Durchbrüchen mit darunterstehenden Auffangschalen (50) aufweist und auf Standbeinen abgestützt ist, insbesondere auf höhenverstellbaren, mit Saugfüßen (53) versehenen Teleskopsäulen.

12. Arbeitsmittelsystem für die Lebensmittel-Zubereitung, insbesondere nach einem der Ansprüche 1 und/oder 9 bis 11, dadurch **gekennzeichnet**, daß eine z.B. durch höhenverstellbare Teleskopsäulen (58) auf einer Grundplatte (56) befestigte Arbeitsplatte (59) zusammen mit Teleskop-Ausziehschienen (57) in einem Küchenmöbelteil (55) ein- und ausschiebbar sowie in Verbindung mit einer Küchenarbeitsplatte höhenverstellbar angeordnet ist.

13. Arbeitsmittelsystem für die Lebensmittel-Zubereitung, insbesondere nach einem der Ansprüche 1 und/oder 9 bis 11, dadurch **gekennzeichnet**, daß eine mit seitlich offenen Durchfallausnehmungen (15) ausgebildete, etwa quadratische Arbeitsplatte (14) mit einem kreuzförmigen Untergestell (19) aus Hochkantleisten auf einer ebenfalls quadratischen, etwas größeren und mit einem erhöhten Rand versehenen Grundplatte (13) befestigt ist, wobei der Mittelteil des Untergestelles (19) in parallelen Hochkantleisten eine Schublade (20) für Zerkleinerungs-Utensilien aufnimmt.

14. Arbeitsmittelsystem nach einem der Ansprüche 1 bis 13, dadurch **gekennzeichnet**, daß für die Bereitstellung der Schneid- und Zerkleinerungs-Utensilien (32) Regalteile (11), Schubladen (33) oder ein austeckbarer Messerblock (M) eingesetzt sind.

15. Arbeitsmittelsystem nach einem der Ansprüche 1 bis 14, dadurch **gekennzeichnet**, daß eine Arbeitsplatte (3, 14 usw.) und/oder eine Grundplatte (1, 13 usw.) ganz oder teilweise mit einer die Arbeitsebene der Arbeitsplatte und die Sammelebene der Grundplatte wallartig eingrenzenden Randleiste (9, 30 usw.) eingefaßt ist bzw. sind.

16. Arbeitsmittelsystem nach einem der Ansprüche 1 bis 15, dadurch **gekennzeichnet**, daß die Arbeitsplatte (65) einen vorzugsweise runden Schneidbretteinsatz (67) mit einem zentrisch angeordneten herausnehmbaren Schneid- und/oder Reibeinsatz (68) aufweist, unter dem ein Auffangbehälter (69) aufstell- oder anbringbar ist.

17. Arbeitsmittelsystem nach einem der Ansprüche 1 bis 16, dadurch **gekennzeichnet**, daß eine Arbeitsplatte (60) mit einem Untergestell aus Tragholmen (61) und Standfüßen (62) durch Steckdübel (63) auf einem fahrbaren Unterschrank (64), einem Küchenmöbel oder Küchengerät, insbesondere auf einem Kühlschrank, befestigt ist.

18. Arbeitsmittelsystem nach einem der Ansprüche 1 bis 17, dadurch **gekennzeichnet**, daß die Ober- und Unterseite einer Arbeitsplatte (3, 14 usw.) für unterschiedliche Zubereitungen ausgebildet sind, z.B. für die Verarbeitung von Fisch, Fleisch, Geflügel usw. einerseits und für die Verarbeitung von Gemüse, Beilagen und/oder Pasta andererseits.

19. Arbeitsmittelsystem nach einem der Ansprüche 1 bis 18, dadurch **gekennzeichnet**, daß die Unterseite einer Arbeitsplatte durch eine elastisch-nachgiebige Polsterung geschützt ist.
